# EUROPÄISCHE PATENTANMELDUNG

(11) **EP 1 753 106 A1**
(43) Veröffentlichungstag der Anmeldung: **14.02.2007**
(21) Anmeldenummer: 05017327.7
(22) Anmeldetag: 09.08.2005
(51) Int. Cl.: H02B 1/044

(54) **Befestigungselement**

(71) Anmelder: SIEMENS AKTIENGESELLSCHAFT, 80333 München (DE)
(72) Erfinder: Kurrer, Siegfried, 90449 Nürnberg (DE)

(57) **Zusammenfassung**

Die Erfindung betrifft ein Befestigungselement (3) zur Befestigung eines mit Lüftungsöffnungen (1,10,12) ausgeführten Gehäuses (2) an einer Halterungsvorrichtung (4). Um eine einfache und variabel gestaltbare Befestigung des Gehäuses (2) an der Halterungsvorrichtung (4) zu ermöglichen, wird vorgeschlagen, dass das Befestigungselement (3) derart ausgeformt ist, dass es in mindestens einer ersten Lüftungsöffnung (1) halterbar ist.

## Beschreibung

Die Erfindung betrifft ein Befestigungselement zur Befestigung eines Gehäuses an einer Halterungsvorrichtung sowie eine Vorrichtung umfassend ein derartiges Befestigungselement und Gehäuse.

Ein derartiges Befestigungselement bzw. eine derartige Vorrichtung kommen beispielsweise bei der Montage eines elektrischen Gerätes zum Einsatz. Im industriellen Umfeld werden zur Bedienung und Beobachtung technischer Anlagen Leitstände mit Schalttafeln, Bedienpulten u. ä. eingesetzt, in die entsprechende Bedien- und Beobachtungsgeräte eingebaut sind. Bei diesen Bedien- und Beobachtungsgeräten handelt es sich beispielsweise um Text Displays zum Anzeigen und Speichern von Meldungen, Operator Panels (OP) zum Bedienen und Beobachten von prozesstechnischen Anlagen, die häufig mit einer Folientastatur ausgestattet sind, oder Touchpanels mit einem berührungssensitiven Bildschirm. Für viele automatisierungstechnische Prozesse werden auch so genannte Panel PCs in einer Leitwarte installiert.

Die genannten Geräte sind in der Regel für einen Fronteinbau vorgesehen. D. h., die Gerätegehäuse werden frontseitig durch eine entsprechende Öffnung einer Frontplatte, z. B. einer Schalttafel, eingeschoben. Als Frontseite ist hier und im Folgenden die für einen Bediener zugängliche Seite der Frontplatte zu verstehen. Häufig bildet ein Rand des Gerätegehäuses nach dem Einschub einen auf der Frontseite aufliegenden Frontplattenüberstand, wobei der Rand mit Hilfe eines geeigneten Befestigungsmittels mit der Frontplatte fixiert wird.

Aus JP 10231816 ist ein Gerätegehäuse bekannt, an dem mehrere Befestigungselemente verankert sind. Die Befestigungselemente umfassen eine Spannschraube zur Verspannung eines auf einer Frontplatte aufliegenden, einen Frontplattenüberstand bildenden Gehäuserandes mit der Frontplatte.

Der Erfindung liegt die Aufgabe zu Grunde, eine einfache und variabel gestaltbare Befestigung eines Gehäuses an einer Halterungsvorrichtung zu ermöglichen.

Diese Aufgabe wird durch ein Befestigungselement zur Befestigung eines mit Lüftungsöffnungen ausgeführten Gehäuses an einer Halterungsvorrichtung gelöst, wobei das Befestigungselement derart ausgeformt ist, dass es in mindestens einer ersten Lüftungsöffnung halterbar ist.

Die meisten elektrischen Geräte sind zum Zwecke der Wärmeabfuhr mit Lüftungsöffnungen im Gehäuse ausgeführt. Bei einem quaderförmigen Gerätegehäuse sind diese Lüftungsöffnungen in der Regel weitgehend gleichmäßig über zumindest zwei Seitenwände des Gehäuses verteilt angeordnet. Der Erfindung liegt nun die Idee zugrunde, das Befestigungselement derart auszugestalten, dass es in einer oder mehreren Lüftungsöffnungen halterbar ist. Durch die Vielzahl der über die Seitenwände verteilt angeordneten Lüftungsöffnungen kann das Befestigungselement zur Montage des Gehäuses an der Halterungsvorrichtung von einen Monteur sehr flexibel an einer nahezu beliebigen Stelle des Gehäuserandes platziert werden. Hierdurch hat der Monteur den Vorteil, dass er die Anzahl der Befestigungsmittel und frei im Hinblick auf die geforderte Festigkeit der Verbindung wählen kann. Auch der Halterungspunkt eines jeden Befestigungselementes am Gehäuserand kann von dem Monteur frei gewählt werden. Er ist hierbei lediglich an das Rastermaß gebunden, welches durch die Anordnung der Lüftungsöffnungen über den Gehäuserand vorgegeben ist. Hat der Monteur sehr hohe Anforderungen an die Festigkeit der Verbindung, so wird er viele Befestigungselemente einsetzen. Steht hingegen die Wärmeabfuhr des innerhalb des Gehäuse angebrachten Gerätes im Vordergrund, so mag der Monteur möglichst wenig Befestigungselemente einsetzen, um so möglichst wenig Lüftungsöffnungen mit Befestigungselementen zu verdecken.

Die flexible Anbringung der Befestigungselemente ist insbesondere dann von Vorteil, wenn das Gehäuse in verschiedenen Orientierungen mit der Halterungsvorrichtung verbunden werden kann. Zur Gewährleistung einer festen mechanischen Verbindung zwischen Gehäuse und Halterungsvorrichtung kann der Monteur immer dort die meisten Befestigungselemente einsetzen, wo ohnehin eine geringe Wärmeabfuhr zu erwarten ist. Eine Gehäusewand, an der eine effiziente Abfuhr der Wärme möglich ist - z. B. eine Geräteoberseite - würde der Monteur folglich mit möglichst wenigen Befestigungselementen bestücken. Dies ist ein entscheidender Vorteil gegenüber heute bekannten Befestigungsvorrichtungen, bei denen die Befestigungselemente fest mit dem Gehäuse verankert sind.

Indem die Lüftungsöffnungen gleichzeitig zur Halterung der Befestigungselemente geeignet sind, können die Seitenwände des Gehäuses komplett mit Lüftungsöffnungen versehen werden. Im Gegensatz zu heute bekannten Befestigungsvorrichtungen müssen keine Verankerungsstellen an den Seitenwänden vorgesehen werden, bei denen auf Lüftungsöffnungen verzichtet wird.

Insbesondere im industriellen Umfeld ist zwischen Gehäuse und Halterungsvorrichtung häufig eine Gummidichtung vorgesehen, die das im Gehäuse gefasste Gerät vor dem Eindringen von Schmutz und Feuchtigkeit schützt. Durch die Möglichkeit der freien Wahl der Befestigungselemente kann der Monteur einen seinen jeweiligen Schutzbedingungen genügenden Anpressdruck der Gummidichtung einstellen.

Vorteilhafter Weise umfasst das Befestigungselement eine Spannschraube. Mit der Spannschraube kann ein Teil des Gehäuses, der z.B. auf der Halterungsvorrichtung aufliegt, mit eben dieser Halterungsvorrichtung verspannt werden. Zweckmäßigerweise weist das Befestigungselement ein Gewinde für die Spannschraube auf, mit dem die Spannschraube geführt wird.

Bei einer sehr einfachen und kostengünstigen Ausgestaltung des Befestigungselementes weist das Befestigungselement mindestens einen ersten Haken auf, der zur Halterung des Befestigungselementes am Gehäuse in die erste Lüftungsöffnung eingreift. Zweckmäßigerweise ist der erste Haken einstückig an das Befestigungselement angeformt. Ein derartiges Befestigungselement kann sehr einfach und kostengünstig zum Beispiel durch einen Stanzprozess gefertigt werden.

Um die mechanische Stabilität der Befestigung zu erhöhen, ist es vorteilhaft, dass das Befestigungselement mindestens einen zweiten Haken aufweist, der zur Halterung des Befestigungselementes am Gehäuse in eine zweite Lüftungsöffnung eingreift, und gegenüber dem ersten Haken bezüglich einer ersten Achse im Wesentlichen parallel verschoben angeordnet ist. Bei zwei hintereinander am Gehäuse angeordneten Lüftungsöffnungen wird z. B. der zweite Haken hinter dem ersten Haken angeordnet. Alternativ kann auch der zweite Haken derartig neben dem ersten Haken liegen, dass der zweite Haken in eine neben der ersten Lüftungsöffnung angeordnete Lüftungsöffnung eingreift.

Insbesondere dann, wenn die Lüftungsschlitze auf einer Seitenwand in Form mehrerer Reihen nebeneinander liegender Lüftungsöffnungen angeordnet sind, ist es zweckmäßig, dass das Befestigungselement mindestens einen dritten Haken aufweist, der zur Halterung des Befestigungselementes am Gehäuse in eine dritte Lüftungsöffnung eingreift, und gegenüber dem ersten Haken bezüglich einer zweiten Achse im Wesentlichen parallel verschoben angeordnet ist, wobei die zweite Achse im wesentlichen orthogonal zur ersten Achse verläuft. Hierdurch wird die Stabilität der Verbindung weiter erhöht. Prinzipiell lässt sich sagen, dass die Stabilität der Verbindung um so größer ist, je mehr Haken das Befestigungselement aufweist. Hingegen wird die Wärmeabfuhr mit steigender Anzahl an Haken verschlechtert, weil jeder Haken eine Lüftungsöffnung zumindest teilweise verdeckt.

Bei einer Vorrichtung, die sowohl ein Befestigungselement gemäß einer der zuvor beschriebenen Ausgestaltungsformen umfasst, als auch ein entsprechendes Gehäuse, ist in einer vorteilhaften Ausgestaltungsform das Gehäuse zum Einschub in eine Frontplatte vorgesehen. Bei einer solchen Frontplatte handelt es sich beispielsweise um ein Bedienpult oder eine Schalttafel, wie sie im industriellen Umfeld häufig zur maschinennahen Bedienung und Beobachtung eines Prozesses vorgesehen sind. Das Gehäuse kann hierbei ein Bedien- und Beobachtungsgerätegehäuse sein.

Insbesondere dann, wenn das Befestigungselement als Spannelement ausgeführt ist, ist es vorteilhaft, wenn ein Rand des Gehäuses gegenüber mindestens einer Seitenwand des Gehäuses abgewinkelt ist und bei befestigtem Gehäuse auf der Halterungsvorrichtung aufliegt. Dieser Rand kann beispielsweise mit Hilfe einer Spannschraube sehr leicht mit der Halterungsvorrichtung, bei der es sich beispielsweise um eine Frontplatte handelt, verspannt werden.

Vorteilhafterweise sind sämtliche Lüftungsöffnungen gleichartig ausgeformt. Auf diese Art und Weise ist es möglich, die Befestigungselemente weitgehend beliebig an einer Seitenwand zu platzieren. Die gleichartige Ausgestaltung der Lüftungsöffnungen gewährleistet, dass der Montageort des Befestigungsmittels lediglich von dem durch die Lüftungsöffnungen vorgegebenen Raster bestimmt ist.

Bei einer sehr einfach zu fertigenden Ausgestaltungsform der Lüftungsöffnungen innerhalb des Gehäuses, sind die Lüftungsöffnungen schlitzförmig ausgeformt. In diese schlitzförmigen Öffnungen lassen sich beispielsweise Haken, die einstückig an das Befestigungselement angeformt sind, sehr leicht einführen und mit der Gehäusewand verankern.

Im Folgenden wird die Erfindung anhand der in den Figuren dargestellten Ausführungsbeispiele näher beschrieben und erläutert. Es zeigen:
- FIG 1: eine aus dem Stand der Technik bekannte Vorrichtung zur Befestigung eines elektrischen Gerätes an einer Halterungsvorrichtung
- FIG 2: ein aus dem Stand der Technik bekanntes Spannelement,
- FIG 3: ein elektrisches Gerät in einem Gehäuse mit Lüftungsöffnungen und in den Lüftungsöffnungen gehalterten Befestigungselementen,
- FIG 4: eine erste perspektivische Ansicht eines in Lüftungsöffnungen halterbaren Befestigungselementes,
- FIG 5: eine zweite perspektivische Ansicht des in Lüftungsöffnungen halterbaren Befestigungselementes,
- FIG 6: eine erste perspektivische Ansicht eines in Lüftungsöffnungen gehalterten Befestigungselementes,
- FIG 7: eine zweite perspektivische Ansicht eines in Lüftungsöffnungen gehalterten Befestigungselementes,
- FIG 8: eine Schnittbilddarstellung des gehalterten Befestigungselementes und
- FIG 9: eine perspektivische Ansicht eines in Lüftungsöffnungen halterbaren weiteren Befestigungselementes

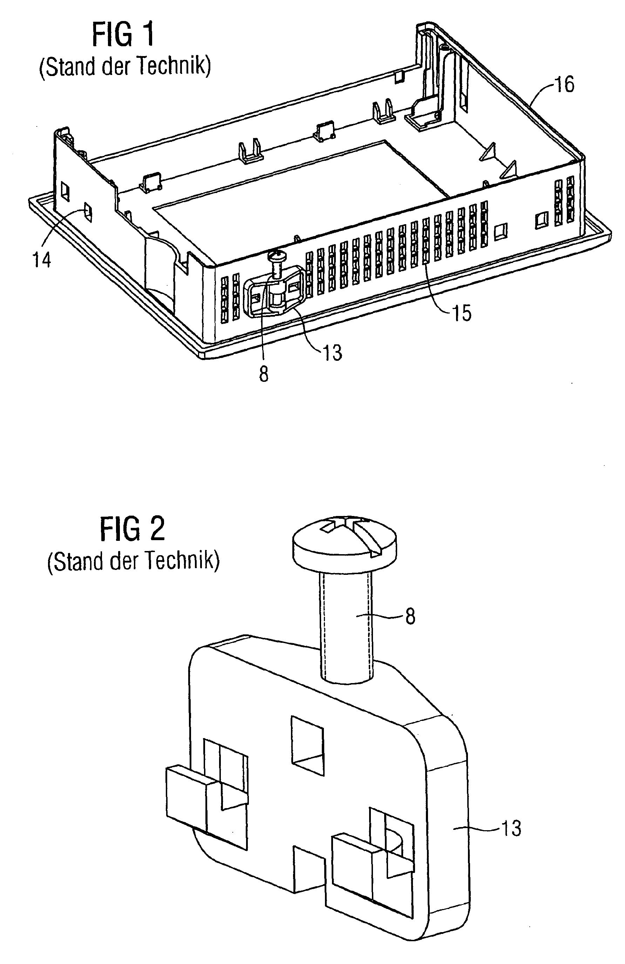

FIG 1 zeigt eine aus dem Stand der Technik bekannte Vorrichtung zur Befestigung eines elektrischen Gerätes an einer Halterungsvorrichtung. Die Vorrichtung weist einen Rahmen 16 auf, der beispielsweise ein Bedien- und Beobachtungsgerät wie einen Touchscreen oder einen Panel-PC aufnehmen kann. Um die Wärmeabfuhr eines solchen Bedien- und Beobachtungsgerätes zu gewährleisten, ist der Rahmen 16 mit Lüftungsschlitzen 15 versehen.

Um den Rahmen 16 und somit das Bedien- und Beobachtungsgerät mit einer Frontplatte befestigen zu können, weist die Vorrichtung Spannelemente 13 auf. Die Spannelemente 13 sind in eigens dafür vorgesehenen Aussparungen 14 gehaltert. Um eine genügend hohe mechanische Stabilität der Befestigung zu erzielen, weist der Rahmen 16 an allen Seiten gleichartige Aussparungen 14 auf, wobei der Übersichtlichkeit halber nur eine mit einem Bezugszeichen versehen ist.

An den Stellen, an denen die Aussparungen 14 vorgesehen sind, sind keine Lüftungsschlitze 15 vorhanden. Bei der Montage eines derartigen aus dem Stand der Technik vorgesehenen Rahmens 16 bzw. des darin gehalterten Bedien- und Beobachtungsgerätes ist der Monteur an die fest vorgegebenen Positionen der Aussparungen 14 gebunden. Ebenso ist die Anzahl der zu verwendeten Spannelemente 13 durch den Aufbau des Rahmens bzw. die Position und die Anzahl der Aussparungen 14 vorgegeben.

FIG 2 zeigt ein aus dem Stand der Technik bekanntes Spannelement 13. Das Spannelement 13 weist eine Spannschraube 8 auf, mit der sich der von der FIG 1 gezeigte Rahmen 16 mit einer Frontplatte verspannen lässt. An dem Spannelement 13 sind Haken angeformt, die in den Aussparungen 14 des Rahmens 16 halterbar sind.

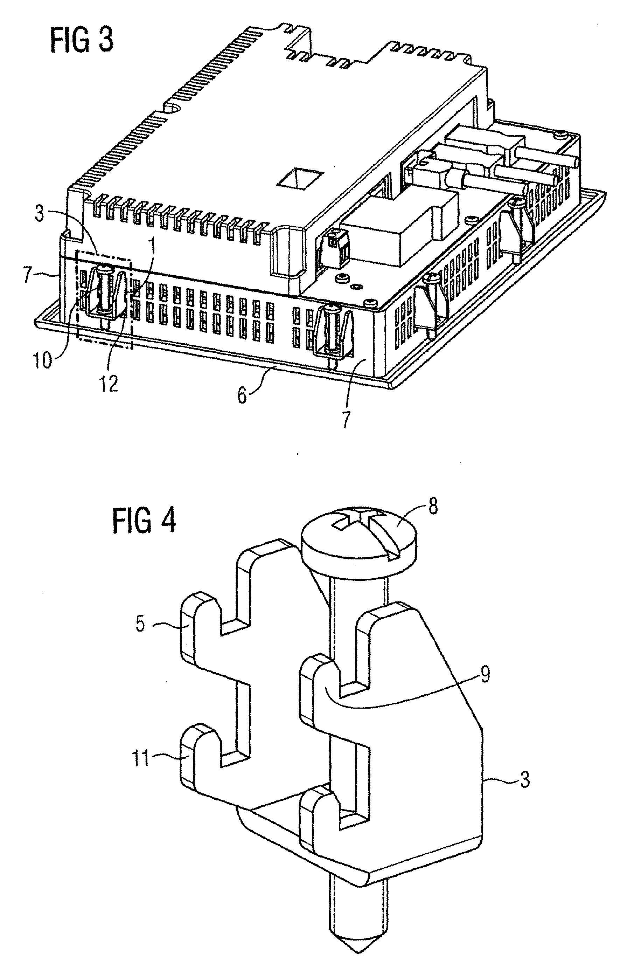

FIG 3 zeigt ein elektrisches Gerät in einem Gehäuse 2 mit Lüftungsöffnungen 1,10,12 und in den Lüftungsöffnungen 1,10,12 gehalterten Befestigungselementen 3. Der Übersichtlichkeit halber, sind nur drei der gleichartig ausgeführten Lüftungsschlitze 1,10,12 mit einem Bezugszeichen versehen. Im Gegensatz zu dem in FIG 1 gezeigten Rahmen 16 sind bei dem gezeigten Gehäuse 2 die Lüftungsöffnungen 1,10,12 weitgehend kontinuierlich und gleichmäßig über den Rand des Gehäuses 2 verteilt. Die Lüftungsöffnungen 1,10,12 sind schlitzförmig ausgeführt und werden daher im Folgenden auch als Lüftungsschlitze bezeichnet 1,10,12.

Die Befestigungselemente 3, die zur Verspannung eines Randes 6 des Gehäuses 2 mit einer Frontplatte vorgesehen sind, sind in beliebigen Lüftungsschlitzen 1,10,12 des Gehäuses 2 halterbar und somit flexibel über eine Seitenwand 7 des Gehäuses 2 positionierbar. Hierdurch ergibt sich der Vorteil, dass die Befestigungselemente 3 von einem Monteur entsprechend der Einsatzbedingungen positioniert werden können.

Die Lüftungsschlitze 1,10,12 sind in Form von zwei Reihen über die Seitenwand 7 des Gehäuses 2 verteilt angeordnet. Eine hohe Stabilität der Halterung wird dadurch erreicht, dass jedes Befestigungselement 3 an insgesamt vier Lüftungsschlitzen 1,10,12 gehaltert wird.

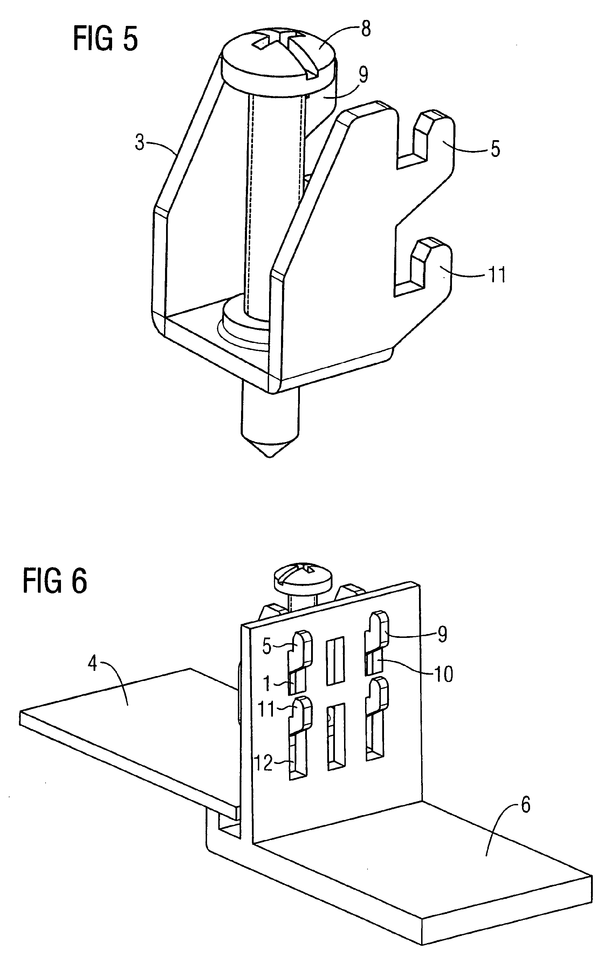

FIG 4 zeigt erste perspektivische Ansicht eines in Lüftungsöffnungen 1,10,12 halterbaren Befestigungselementes 3 und FIG 5 zeigt eine zweite perspektivische Ansicht des in Lüftungsöffnungen 1,10,12 halterbaren Befestigungselementes 3. Bei dem Befestigungselement 3 handelt es sich um ein Spannelement mit einer Spannschraube 8, die in ein Gewinde des Spannelementes 3 eingeschraubt ist. Weiterhin sind an das Befestigungselement Haken 5,9,11 einstückig angeformt, die in die Lüftungsschlitze 1,10,12 der Seitenwand 7 des Gehäuses 2 eingreifen und somit das Befestigungselement 3 am Gehäuse 2 haltern. Jedes Befestigungselement 3 weist vier Haken 5,9,11 auf (von denen nur drei mit Bezugszeichen versehen sind), die in entsprechend angeordnete Lüftungsschlitze am Gehäuse eingreifen und so für eine sehr feste Verbindung sorgen.

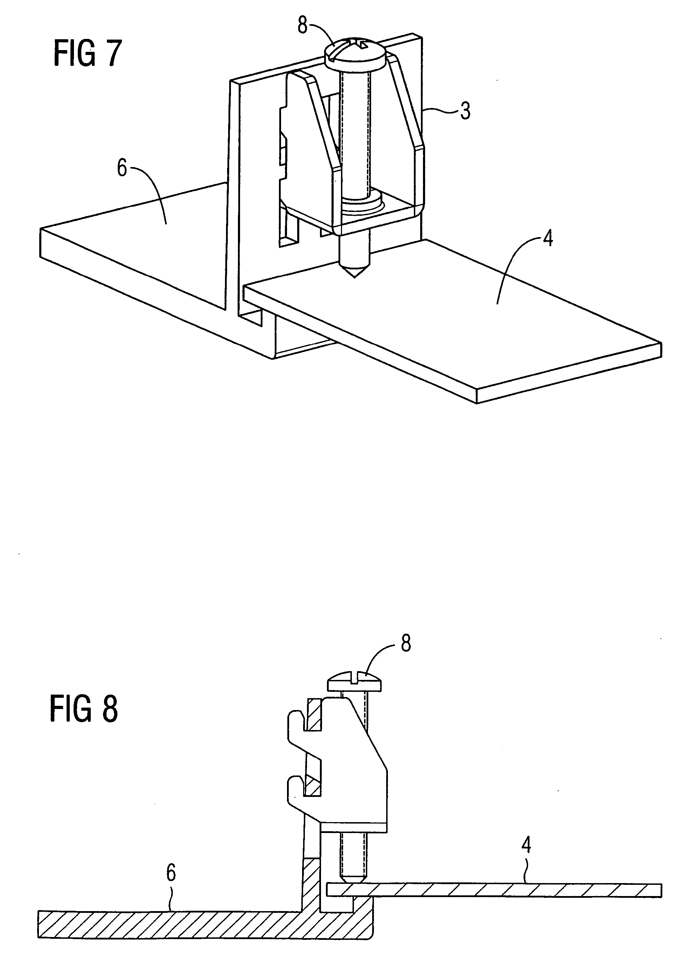

FIG 6 zeigt eine erste perspektivische Ansicht eines in Lüftungsöffnungen 1,10,12 gehalterten Befestigungselementes 3 und FIG 7 zeigt eine zweite perspektivische Ansicht des in Lüftungsöffnungen 1,10,12 gehalterten Befestigungselementes 3. Durch Eindrehen der Spannschraube 8 wird der Rand des Gehäuses 6 mit der Halterungsvorrichtung 4 verspannt. Bei der Halterungsvorrichtung 4 handelt es sich beispielsweise um eine Frontplatte eines Bedienpultes oder eine Schalttafel.

FIG 8 zeigt eine Schnittdarstellung des gehalterten Befestigungselementes 3. Auch hier ist zu erkennen, dass durch Anziehen der Spannschraube 8 ein Druck zwischen der Halterungsvorrichtung 4 und dem Rand 6 des Gehäuses 2 aufgebaut wird.

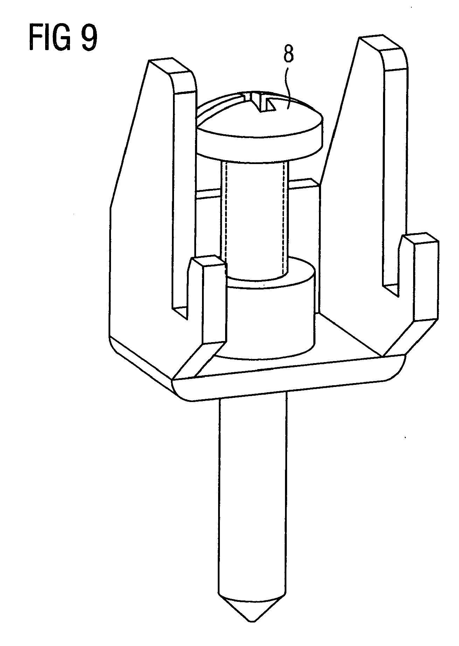

FIG 9 zeigt eine perspektivische Ansicht eines in Lüftungsöffnungen halterbaren weiteren Befestigungselementes. Im Gegensatz zu dem zuvor gezeigten Befestigungselement 3 ist das weitere Befestigungselement nur mit zwei anstelle von vier Haken ausgeführt. Die dargestellten Haken sind somit zur Halterung in zwei nebeneinander liegenden Lüftungsschlitzen des Gehäuses 2 vorgesehen. Eine derartige Ausgestaltungsform des Befestigungselementes ermöglicht eine preiswertere Fertigung. Jedoch wird bei einer Ausgestaltungsform mit vier Haken eine bessere Kraftverteilung über die Seitenwand 7 des Gehäuses 2 erzielt.

## Patentansprüche

1. Befestigungselement (3) zur Befestigung eines mit Lüftungsöffnungen (1,10,12) ausgeführten Gehäuses (2) an einer Halterungsvorrichtung (4), wobei das Befestigungselement (3) derart ausgeformt ist, dass es in mindestens einer ersten Lüftungsöffnung (1) halterbar ist.

2. Befestigungselement (3) nach Anspruch 1,
wobei das Befestigungselement (3) eine Spannschraube (8) aufweist.

3. Befestigungselement nach Anspruch 2,
wobei das Befestigungselement (3) ein Gewinde für die Spannschraube (8) aufweist.

4. Befestigungselement (3) nach einem der vorhergehenden Ansprüche,
wobei das Befestigungselement (3) mindestens einen ersten Haken (5) aufweist, der zur Halterung des Befestigungselementes (3) am Gehäuse (2) in die erste Lüftungsöffnung (1) eingreift.

5. Befestigungselement (3) nach Anspruch 4,
wobei der erste Haken (5) einstückig an das Befestigungselement (3) angeformt ist.

6. Befestigungselement nach Anspruch 4 oder 5,
wobei das Befestigungselement (3) mindestens einen zweiten Haken (9) aufweist, der zur Halterung des Befestigungselementes (3) am Gehäuse (2) in eine zweite Lüftungsöffnung (10) eingreift, und gegenüber dem ersten Haken (1) bezüglich einer ersten Achse im Wesentlichen parallel verschoben angeordnet ist.

7. Befestigungselement nach Anspruch 6,
wobei das Befestigungselement (3) mindestens einen dritten Haken (11) aufweist, der zur Halterung des Befestigungselementes (3) am Gehäuse (2) in eine dritte Lüftungsöffnung (12) eingreift, und gegenüber dem ersten Haken (1) bezüglich einer zweiten Achse im Wesentlichen parallel verschoben angeordnet ist, wobei die zweite Achse im Wesentlichen orthogonal zur ersten Achse verläuft.

8. Vorrichtung mit einem Befestigungselement (3) nach einem der Ansprüche 1 bis 7 und einem mit Lüftungsöffnungen (1,10,12) ausgeführten Gehäuse (2).

9. Vorrichtung nach Anspruch 8,
wobei das Gehäuse (2) zum Einschub in eine Frontplatte vorgesehen ist.

10. Vorrichtung nach Anspruch 8 oder 9,
wobei das Gehäuse (2) ein Bedien- und Beobachtungsgerätegehäuse ist.

11. Vorrichtung nach Anspruch 8, 9 oder 10,
wobei ein Rand (6) des Gehäuses (2) gegenüber mindestens einer Seitenwand (7) des Gehäuses (2) abgewinkelt ist und bei befestigtem Gehäuse (2) auf der Halterungsvorrichtung (4) aufliegt.

12. Vorrichtung nach einem der Ansprüche 8 bis 11,
wobei sämtliche Lüftungsöffnungen (1,10,12) gleichartig ausgeformt sind.

13. Vorrichtung nach einem der Ansprüche 8 bis 12,
wobei die Lüftungsöffnung (1) schlitzförmig ausgeformt ist.
